# EUROPÄISCHE PATENTSCHRIFT

(11) **EP 3 350 911 B1**
(45) Veröffentlichungstag und Bekanntmachung des Hinweises auf die Patenterteilung: **12.07.2023**
(21) Anmeldenummer: 16763295.9
(22) Anmeldetag: 12.09.2016
(51) Int. Cl.: H02M 1/42, H02M 3/157

(54) **PFC-MODUL FÜR LÜCKENDEN BETRIEB**
PFC MODULE FOR INTERMITTENT FLOW
MODULE PFC POUR FONCTIONNEMENT EN MODE DE CONDUCTION DISCONTINU

(30) Priorität: 15.09.2015 DE 102015217629
(43) Veröffentlichungstag der Anmeldung: 25.07.2018
(73) Patentinhaber: Tridonic GmbH & Co. KG, 6851 Dornbirn (AT)
(72) Erfinder: MARENT, Günter, 6780 Bartholomäberg (AT); ONDRISEK, Thomas, 1230 Wien (AT)
(74) Vertreter: Rupp, Christian
(86) Internationale Anmeldenummer: PCT/EP2016/071473
(87) Internationale Veröffentlichungsnummer: WO 2017/046039

(56) Entgegenhaltungen:
- CN-U- 204 538 956
- DE-A1- 4 013 477
- DE-A1-102009 054 692
- DE-C2- 4 013 477
- US-A1- 2007 285 028
- US-A1- 2014 062 317
- US-B1- 7 295 452
- YE Z Z ET AL: "Digital implementation of a unity-power-factor constant-frequency DCM boost converter", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 2, 6. März 2005 (2005-03-06), Seiten 818-824Vol.2, XP010809330, DOI: 10.1109/APEC.2005.1453074 ISBN: 978-0-7803-8975-5
- BIBIAN S ET AL: "Digital control with improved performance for boost power factor correction circuits", APEC 2001. 16TH. ANNUAL IEEE APPLIED POWER ELECTRONICS CONFERENCE AND EXPOSITION. ANAHEIM, CA, MARCH 4 - 8, 2001; [ANNUAL APPLIED POWER ELECTRONICS CONFERENCE], NEW YORK, NY : IEEE, US, Bd. 1, 4. März 2001 (2001-03-04), Seiten 137-143, XP010535986, DOI: 10.1109/APEC.2001.911639 ISBN: 978-0-7803-6618-3
- Z.Z. Ye ET AL: "Implementation and Performance Evaluation of DSP-Based Control for Constant-Frequency Discontinuous-Conduction-Mode Boost PFC Front End", IEEE Transactions on industrial electronics, vol. 52, no. 1, 1 February 2005 (2005-02-01), pages 98-107, XP055339436, USA ISSN: 0278-0046, DOI: 10.1109/TIE.2004.841131

## Beschreibung

### Gebiet der Erfindung

Die vorliegende Erfindung betrifft ein PFC-Modul aufweisend eine aktiv getaktete PFC-Schaltung und eine Steuereinheit, welche die aktiv getaktete PFC-Schaltung im Lückbetrieb (engl. Discontinous conduction mode) steuert, ein System mit einem solchen intelligenten PFC-Modul und wenigstens einer Konverterstufe zum Betreiben bspw. einer LED-Strecke, Beleuchtungsvorrichtungen mit einem solchen PFC-Modul und System und Verfahren zum Betreiben eines solchen PFC-Moduls und Systems.

### Hintergrund und Aufgabe der Erfindung

Aus dem Stand der Technik sind bereits aktiv getaktete PFC-Schaltungen (Power Factor Control Schaltungen bzw. Leistungsfaktorkorrektur-Schaltungen) mit wenigstens einem aktiv getakteten Schalter und die Steuerung bzw. Regelung solcher PFC-Schaltungen durch eine Steuereinheit bekannt.

Derartige Schaltungen dienen in Betriebsgeräten für Leuchtmittel, wie zum Beispiel eine LED-Strecke aufweisend eine oder mehrere LEDs, dazu, um eine zugeführte Gleichspannung (DC-Spannung) oder Wechselspannung (AC-Spannung) auf ein bestimmtes Spannungsniveau umzusetzen. Gleichzeitig werden aktiv getaktete PFC-Schaltungen verwendet, um einen Verbraucher mit einem Leistungsfaktor (Power Factor) nahezu 1 darzustellen, wenn eine AC-Spannung, wie zum Beispiel eine Netzwechselspannung, der PFC-Schaltung zugeführt wird.

Um dies zu erreichen wird die aktiv getaktete PFC-Schaltung, insbesondere der wenigstens eine Schalter der aktiv getaktete PFC-Schaltung, derart durch die Steuereinheit gesteuert bzw. geregelt, dass der aufgenommene Strom genau wie die AC-Spannung einen sinusförmigen Zeitverlauf aufweist. Dadurch können Oberwellenströme im Versorgungnetz verringert werden, welche bei einem nicht sinusförmigen Zeitverlauf des durch die PFC-Schaltung aufgenommenen Stroms entstehen würden. D.h. die Steuereinheit steuert bzw. taktet den wenigstens einen Schalter der aktiv getakteten PFC-Schaltung derart, dass der durch die PFC-Schaltung aufgenommen Strom an eine Sinus-Hüllkurve angepasst wird, damit der Strom einen sinusförmigen Zeitverlauf entsprechend dem sinusförmigen Zeitverlauf der AC-Spannung, mit der die PFC-Schaltung versorgt wird, zeigt.

Es gibt verschiedene bekannte Betriebsarten, in denen die Steuereinheit eine PFC-Schaltung betreiben kann, wie zum Beispiel den nichtlückenden Strombetrieb bzw. Nichtlückbetrieb (Continous Current Mode/CCM), lückenden Strombetrieb bzw. Lückbetrieb (Discontinous Current Mode/DCM) und den Grenzbetrieb (Borderline Mode).

Charakteristisch für den Grenzbetrieb ist, dass der wenigstens eine Schalter der aktiv getakteten PFC-Schaltung eingeschalten wird, wenn der Strom durch die Spule der aktiv getaktete PFC-Schaltung auf null Ampere (0 A) fällt. Dies hat den Nachteil, dass der Nulldurchgang des Stroms durch die Spule gemessen und der Steuereinheit zugeführt werden muss. Im Gegensatz dazu wird im Lückbetrieb der wenigstens eine Schalter mit einer festen Frequenz gesteuert, d.h. nach einer festen Periode bzw. Zeitspanne eingeschalten, wobei bei jedem Schaltzyklus eine Totzeit vorliegt, während der kein Strom durch die Spule fließt.

Der Stand der Technik bezüglich aktiv getakteter PFC-Schaltungen und einer Leistungsfaktorkorrektur mit solchen Schaltungen kann z.B. den folgenden Druckschriften entnommen werden:
- dem US Patent 5,777,866,
- der US Patentanmeldung US 2009/0141524 A1, sowie
- den internationalen Patentanmeldungen WO 2011/009717 A2 und WO 2007/121944 A2.

Weiterer Stand der Technik für die vorliegende Anmeldung ist:
- YE Z Z ET AL: "Digital implementation of a unity-power-factor constant-frequency DCM boost converter",APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 2, 6. März 2005 (2005-03-06), Seiten 818-824, Vol.2.
- DE 40 13 477 A1, 1
- BIBIAN S ET AL: "Digital control with improved performance for boost power factor correction circuits",APEC 2001. 16TH. ANNUAL IEEE APPLIED POWER ELECTRONICS CONFERENCE AND EXPOSITION. ANAHEIM, CA, MARCH 4 - 8, 2001; [ANNUAL APPLIED POWER ELECTRONICS CONFERENCE], NEW YORK, NY : IEEE, US, Bd. 1, 4. März 2001 (2001-03-04), Seiten 137-143.

PFC-Schaltungen bilden in Betriebsgeräten für Leuchtmittel, wie z.B. LEDs, oft nur eine erste Konverterstufe. Folglich ist an eine PFC-Schaltung oft wenigstens eine weitere Konverterstufe zum Betreiben der Leuchtmittel angeschlossen, welche mit der Ausgangsspannung V_{BUS} der PFC-Schaltung versorgt wird. Diese wenigstens eine Konverterstufe stellt dann eine Konstantstromquelle oder Konstantspannungsquelle dar, welche im Fall einer LED-Last, den entsprechenden LED-Strom oder die entsprechende Spannung zum Betreiben der LED-Last erzeugt. Die wenigstens eine Konverterstufe kann eine aktiv getaktete Stromquelle bzw. eine Linearstromquelle sein, welche durch eine eigene Steuereinheit gesteuert wird.

Um einen an sich veränderte Eingangsspannungs- bzw. Lastbedingungen angepassten Betrieb der PFC-Schaltung und der wenigstens einen Konverterstufe zu gewährleisten, müssen die Steuereinheiten dieser beiden Schaltungen aufeinander abgestimmt sein.

Es ist nun die Aufgabe der vorliegenden Erfindung ein intelligentes PFC-Modul bereitzustellen, das eine aktiv getaktete PFC-Schaltung und als Steuereinheit eine integrierte Schaltung aufweist, wobei die aktiv getaktete PFC-Schaltung durch die integrierte Schaltung im Lückbetrieb betrieben bzw. gesteuert wird. Ferner ist es die Aufgabe der vorliegenden Erfindung ein System aufweisend ein solches intelligentes PFC-Modul und wenigstens eine weitere an die PFC-Schaltung des PFC-Moduls angeschlossene Konverterstufe zum Betreiben einer LED-Strecke, mit einer oder mehrerer LEDs, bereitzustellen, wobei die wenigstens eine Konverterstufe ebenfalls durch die integrierte Schaltung bzw. integrierte Steuerschaltung des PFC-Moduls gesteuert wird.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

### Beschreibung der Erfindung

Gemäß einem ersten Aspekt der vorliegenden Erfindung ist ein PFC-Modul nach Anspruch 1 vorgesehen. 1

Des Weiteren kann erfindungsgemäß die integrierte Steuerschaltung wenigstens einen Eingangspin aufweisen, wobei die integrierte Steuerschaltung über den wenigstens einen Eingangspin die Eingangsspannung und die Ausgangsspannung der PFC-Schaltung erfassen kann.

Ferner kann erfindungsgemäß die integrierte Steuerschaltung wenigstens zwei Eingangspins aufweisen, wobei die integrierte Steuerschaltung über den ersten der wenigstens zwei Eingangspins die Eingangsspannung der PFC-Schaltung erfassen kann und über den zweiten der wenigstens zwei Eingangspins die Ausgangsspannung der PFC-Schaltung erfassen kann.

Erfindungsgemäß ist an die aktiv getaktete PFC-Schaltung direkt oder indirekt ein Lastkreis aufweisend eine LED-Strecke mit einer oder mehreren LEDs, angeschlossen, wobei die integrierte Schaltung dazu angepasst ist, um die aktiv getaktete PFC-Schaltung und/oder den Lastkreis auf der Basis wenigstens einer Rückführgröße von dem Lastkreis zu steuern.

Ferner kann erfindungsgemäß die integrierte Schaltung dazu angepasst sein, um die Betriebsfrequenz der PFC-Schaltung mit einer Frequenz unterhalb der Frequenz einer Halbwelle der Eingangsspannung der PFC-Schaltung als Anpassung an sich veränderte Eingangsspannungs- und/oder Lastverhältnisse zu ändern.

Des Weiteren kann erfindungsgemäß die Eingangsspannung der aktiv getakteten PFC-Schaltung eine gleichgerichtete Wechselspannung, vorzugsweise eine Netzspannung, sein.

Die vorstehend genannten optionalen Merkmale können gemäß der Erfindung beliebig kombiniert werden, um das erfindungsgemäße PFC-Modul zu ergeben.

Gemäß einem zweiten Aspekt der vorliegenden Erfindung ist ein System nach Anspruch 4 vorgesehen. 1

In dem erfindungsgemäßen System steuert die integrierte Schaltung den wenigstens einen ersten Schalter der aktiv getakteten PFC-Schaltung im Lückbetrieb, wobei die integrierte Schaltung die aktiv getaktete PFC-Schaltung und die wenigstens eine Konverterstufe abhängig von den Eingangsspannungs- und/oder Lastverhältnissen steuert, und die integrierte Schaltung den wenigstens einen zweiten Schalter der wenigstens einen Konverterstufe zum Einstellen der durch die LED-Strecke abgegebenen Lichtleistung steuert.

Ferner kann in dem erfindungsgemäßen System die integrierte Steuerschaltung Gruppen getakteter elektrische Bauelemente und/oder Gruppen nicht-getakteter elektrischer Bauelemente der wenigstens einen Konverterstufe steuern.

Des Weiteren kann in dem erfindungsgemäßen System die wenigstens eine Konverterstufe eine getaktete Stromquelle zum Betreiben der LED-Strecke oder eine nicht-getaktete Stromquelle zum Betreiben der LED-Strecke darstellen.

Ferner kann in dem erfindungsgemäßen System die integrierte Steuerschaltung wenigstens eine erste Rückführgröße von der wenigstens einen Konverterstufe und/oder wenigstens eine zweite Rückführgröße von der durch die wenigsten eine Konverterstufe betreibbaren LED-Strecke erfassen.

Des Weiteren kann in dem erfindungsgemäßen System die integrierte Steuerschaltung die aktiv getaktete PFC-Schaltung, vorzugsweise die Betriebsfrequenz der aktiv getakteten PFC-Schaltung, und die wenigstens eine Konverterstufe abhängig von der Eingangsspannung der aktiv getakteten PFC-Schaltung, der wenigstens einen ersten Rückführgröße und/oder der wenigstens einen zweiten Rückführgröße steuern.

Ferner kann in dem erfindungsgemäßen System die Ausgangsspannung der aktiv getakteten PFC-Schaltung der Eingangsspannung der wenigstens einen Konverterstufe entsprechen, wobei die integrierte Steuerschaltung die Ausgangsspannung der aktiv getakteten PFC-Schaltung abhängig von der Eingangsspannung der aktiv getakteten PFC-Schaltung, der wenigstens einen ersten Rückführgröße und/oder der wenigstens einen zweiten Rückführgröße steuern kann.

Des Weiteren kann in dem erfindungsgemäßen System die integrierte Steuerschaltung die Betriebsfrequenz der PFC-Schaltung mit einer Frequenz unterhalb der Frequenz einer Halbwelle der Eingangsspannung der aktiv getakteten PFC-Schaltung abhängig von der Eingangsspannung der aktiv getakteten PFC-Schaltung, der wenigstens einen ersten Rückführgröße und/oder der wenigstens einen zweiten Rückführgröße ändern.

Die vorstehend genannten optionalen Merkmale können gemäß der Erfindung beliebig kombiniert werden, um das erfindungsgemäße System zu ergeben.

Gemäß einem dritten Aspekt der vorliegenden Erfindung ist eine Beleuchtungsvorrichtung vorgesehen, mit einem erfindungsgemäßen PFC-Modul wie vorstehend beschrieben und einer LED-Strecke aufweisend wenigstens eine LED, wobei das PFC-Modul dazu eingerichtet ist, um die LED-Strecke zu betreiben.

Gemäß einem vierten Aspekt der vorliegenden Erfindung ist eine Beleuchtungsvorrichtung vorgesehen, mit einem erfindungsgemäßen System wie vorstehend beschrieben und einer LED-Strecke aufweisend wenigstens eine LED, wobei das System dazu eingerichtet ist, um die LED-Strecke zu betreiben.

Gemäß einem fünften Aspekt der vorliegenden Erfindung ist ein Verfahren nach Anspruch 11 vorgesehen.

Die wenigstens eine Konverterstufe ist direkt oder indirekt an die PFC-Schaltung angeschlossen. Gemäß dem erfindungsgemäßen Verfahren steuert die integrierte Schaltung den wenigstens einen ersten Schalter der aktiv getakteten PFC-Schaltung im Lückbetrieb, wobei die integrierte Schaltung die aktiv getaktete PFC-Schaltung und die wenigstens eine Konverterstufe abhängig von den Eingangsspannungs- und/oder Lastverhältnissen steuert, und wobei die integrierte Schaltung den wenigstens einen zweiten Schalter der wenigstens einen Konverterstufe zum Einstellen der durch die LED-Strecke abgegebenen Lichtleistung steuert.

### Kurzbeschreibung der Figuren

Weitere Vorteile, Merkmale und Eigenschaften der vorliegenden Erfindung sollen nunmehr Bezug nehmend auf die Figuren der begleitenden Zeichnung näher erläutert werden.
- Fig. 1: zeigt dabei schematisch ein bevorzugtes Ausführungsbeispiel des erfindungsgemäßen Systems, wobei das System das erfindungsgemäße PFC-Modul mit der aktiv getakteten PFC-Schaltung und der integrierten Steuerschaltung sowie die wenigstens eine Konverterstufe zum Betreiben einer LED-Strecke umfasst.
- Fig. 2: zeigt schematisch ein erstes bevorzugtes Ausführungsbeispiel des erfindungsgemäßen PFC-Moduls.
- Fig. 3: zeigt schematisch ein zweites bevorzugtes Ausführungsbeispiel des erfindungsgemäßen PFC-Moduls.
- Fig. 4: zeigt schematisch das durch die integrierte Steuerschaltung des erfindungsgemäßen PFC-Moduls erzeugte Taktsignal (unterer Graph) zum Steuern bzw. Takten des wenigstens einen Schalters der PFC-Schaltung des erfindungsgemäßen PFC-Moduls im Lückbetrieb bei fester Frequenz sowie ein Taktsignal (oberer Graph) zum Steuern eines Schalters einer PFC-Schaltung im Lückbetrieb bei fester Frequenz gemäß dem Stand der Technik.
- Fig. 5: zeigt schematisch die Anpassung des durch die PFC-Schaltung des erfindungsgemäßen PFC-Moduls, aufgenommenen Stroms an eine sinusförmige Hüllkurve, wenn die PFC-Schaltung im Lückbetrieb bei fester Frequenz gemäß der Erfindung (unterer Graph) bzw. gemäß dem Stand der Technik (oberer Graph) betrieben wird.
- Fig. 6: zeigt schematisch ein bevorzugtes Ausführungsbeispiel der wenigstens einen Konverterstufe des erfindungsgemäßen Systems.

### Detaillierte Figurenbeschreibung

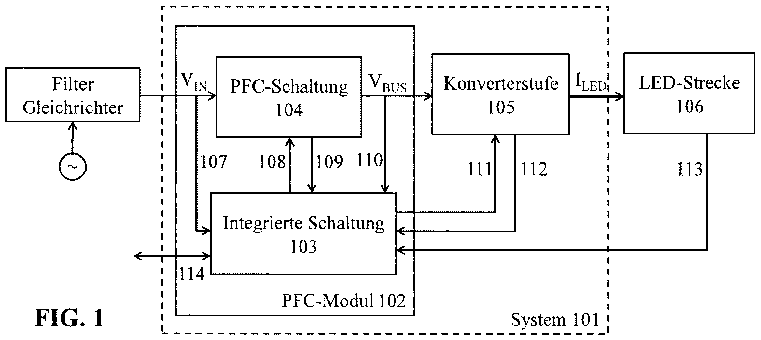

Fig. 1 zeigt schematisch ein bevorzugtes Ausführungsbeispiel des erfindungsgemäßen Systems 101. Das System 101 umfasst ein PFC-Modul 102 und wenigstens eine Konverterstufe 105 zum Betreiben einer LED-Strecke 106. Gemäß der Fig. 1 ist die LED-Strecke 106 nicht Bestandteil des Systems 101. Erfindungsgemäß kann die LED-Strecke 106 aber auch Bestandteil des Systems 101 sein.

Das System 101 kann auch einem Betriebsgerät zum Betreiben einer LED-Strecke 106 entsprechen. Ferner kann das PFC-Modul 102 zusammen mit der LED-Strecke 106 oder das System 101 zusammen mit der LED-Strecke 106 eine Beleuchtungsvorrichtung bilden.

Das PFC-Modul 102 umfasst eine aktiv getaktete PFC-Schaltung 104 und eine integrierte Schaltung 103 als Steuerschaltung für die aktiv getaktete PFC-Schaltung 104.

Die integrierte Schaltung 103 kann jede dem Fachmann bekannte integrierten Schaltung bzw. Steuerschaltung sein, die zum Steuern bzw. Betreiben einer aktiv getakteten PFC-Schaltung verwendet werden kann. Gemäß der Erfindung ist die integrierte Schaltung 103 vorzugsweise ein Mikrokontroller.

Die aktiv getaktete PFC-Schaltung 104 weist wenigstens einen Schalter auf und kann zum Beispiel eine Boost-PFC-Schaltung, d.h. eine PFC-Schaltung aufweisend einen Aufwärtswandler bzw. Boost-Konverter, oder eine Buck-PFC-Schaltung, d.h. eine PFC-Schaltung aufweisend einen Abwärtswandler bzw. Buck-Konverter, sein. Gemäß der Erfindung kann die PFC-Schaltung 104 aber jede dem Fachmann bekannte aktiv getaktete PFC-Schaltung sein.

Gemäß Fig. 1 wird der PFC-Schaltung 104 eine gleichgerichtete Wechselspannung, vorzugsweise gleichgerichtete Netzspannung/Netzwechselspannung, als Eingangsspannung V_{IN} zugeführt. Die Wechselspannung kann gefiltert bzw. geglättet werden. Erfindungsgemäß kann der PFC-Schaltung aber auch eine Gleichspannung zugeführt werden. Somit entspricht die Eingangsspannung V_{IN} der aktiv getakteten PFC-Schaltung einer gleichgerichteten und vorzugsweise gefilterten Wechselspannung, wie z.B. einer Netzspannung, oder einer Gleichspannung.

Gemäß der Erfindung kann die Gleichrichtung und Filterung der der PFC-Schaltung 104 zugeführten Spannung auf jede dem Fachmann bekannte Art und Weise erfolgen, um die Eingangsspannung V_{IN} zu ergeben. Zum Beispiel kann die Gleichrichtung mittels einer Brückengleichrichtungs-Schaltung bestehend aus vier Dioden erfolgen und die Filterung kann mittels eines EMI-Filters oder Tiefpassfilters erfolgen.

Gemäß Fig. 1 sind die Elemente zur Gleichrichtung und Filterung nicht Bestandteil des Systems 101.

Erfindungsgemäß können aber die Elemente zur Gleichrichtung und die Elemente zur Filterung auch Bestandteil des Systems 101, des PFC-Moduls 102 und/oder der PFC-Schaltung 104 sein. Zusätzlich zu einer möglichen Filterung außerhalb des Systems 101 können weitere Elemente zur Filterung im PFC-Modul 102 und/oder in der PFC-Schaltung 104 vorgesehen sein.

Die Ausgangsspannung V_{BUS} der PFC-Schaltung 104 entspricht vorzugsweise einer Gleichspannung, die je nachdem was für eine aktiv getaktete PFC-Schaltung 104 verwendet wird, ein höheres bzw. niedrigeres Spannungsniveau im Vergleich zu der Eingangsspannung V_{IN} aufweist. Insbesondere wird die Ausgangsspannung V_{BUS} durch die Taktung des wenigstens einen Schalters der PFC-Schaltung 104 eingestellt.

Gemäß der Erfindung steuert bzw. betreibt die integrierte Schaltung 103 bei sich nichtveränderten Randbedingungen, wie zum Beispiel Eingangsspannung, Last usw., die aktiv getaktete PFC-Schaltung 104 im Lückbetrieb mit einer festen Frequenz bzw. Betriebsfrequenz. D.h. die integrierte Schaltung taktet bzw. betreibt den wenigstens einen Schalter der aktiv getakteten PFC-Schaltung 104 im Lückbetrieb bei einer festen Betriebsfrequenz.

Dazu wird von der integrierten Steuerschaltung 103 ein Signal bzw. Taktsignal 108 der PFC-Schaltung 104 zur Taktung des wenigstens einen Schalters der PFC-Schaltung 104 zugeführt.

Dieses Signal 108 wird in der integrierten Schaltung 103 auf der Basis der Eingangsspannung V_{IN} und vorzugsweise der Ausgangsspannung V_{BUS} bestimmt bzw. berechnet. Die Bestimmung des Signals 108 zur Taktung des wenigstens einen Schalters der PFC-Schaltung 104 kann auf jede dem Fachmann bekannte Art und Weise erfolgen.

Dazu werden der integrierten Schaltung 103 eine die Eingangsspannung V_{IN} der PFC-Schaltung 104 wiedergebende Rückführgröße bzw. Signal 107 und eine die Ausgangsspannung V_{BUS} der PFC-Schaltung 104 wiedergebende Rückführgröße bzw. Signal 110 zugeführt.

Die Messung der Eingangsspannung V_{IN} und der Ausgangsspannung V_{BUS} bzw. Erzeugung der entsprechenden Rückführgrößen 107 und 110 sowie die Zuführung der Rückführgrößen 107 und 110 zu der integrierten Schaltung 103 kann erfindungsgemäß auf jede dem Fachmann bekannte Art und Weise erfolgen. Diese Messung bzw. Erzeugung kann sowohl außerhalb der PFC-Schaltung 104 wie auch innerhalb der PFC-Schaltung 104 erfolgen.

Ferner kann erfindungsgemäß die Eingangsspannung V_{IN} und die Ausgangsspannung V_{BUS} mittels einer einzelnen Rückführgröße der integrierten Schaltung 103 zugeführt werden. Optional kann noch wenigstens eine weitere Rückführgröße 109 der integrierten Schaltung 103 zugeführt werden. Zum Beispiel kann die wenigstens eine weitere Rückführgröße 109 den Strom durch den wenigstens einen Schalter der PFC-Schaltung 104 wiedergeben, um einen Überstrom erfassen zu können.

Gemäß Fig. 1 weist das System 101 eine Konverterstufe 105 auf, der die Ausgangsspannung V_{BUS} von der PFC-Schaltung 104 zugeführt wird, wobei die Konverterstufe den Strom bzw. LED-Strom I_{LED} zum Betreiben der LED-Strecke 106 erzeugt. Erfindungsgemäß kann das System 101 aber auch mehr als eine Konverterstufe aufweisen und die Konverterstufe 105 kann direkt oder indirekt, d.h. über wenigstens eine weitere Konverterstufe, die Ausgangsspannung V_{BUS} von der PFC-Schaltung 104 des PFC-Moduls 102 aufnehmen und direkt oder indirekt den LED-Strom I_{LED} der LED-strecke 106 zuführen.

Erfindungsgemäß stellt die wenigstens eine Konverterstufe 105 des Systems 101 eine Stromquelle dar. Die Konverterstufe 105 kann eine getaktete oder eine nicht getaktete Stromquelle sein. Ferner kann die Konverterstufe 105 sowohl getaktete Baugruppen wie auch nicht getaktete Baugruppen aufweisen.

Zum Beispiel kann die wenigstens eine Konverterstufe 105 ein primärgetakteter Konverter bzw. Wandler sein, wie z.B. ein Abwärtswandler/Buck-Konverter oder Aufwärtswandler/Boost-Konverter, oder ein sekundär getakteter Konverter bzw. Wandler sein, wie z.B. ein Sperrwandler/Flyback-Konverter, Durchflusswandler oder Resonanzwandler.

Die wenigstens eine Konverterstufe 105 kann aber auch eine Linearstromquelle sein, wie z.B. ein Linearregler realisiert mit Schaltern, vorzugsweise Transistoren, oder integrierten Schaltkreisen. Gemäß der Erfindung kann die wenigstens eine Konverterstufe 105 des Systems 101 jede dem Fachmann bekannte Schaltung sein, die aus der Ausgangsspannung V_{BUS} der PFC-Schaltung 104 einen LED-Strom zum Betreiben einer LED-Strecke 106 erzeugen kann.

Ferner weist erfindungsgemäß die Konverterstufe 105 wenigstens einen Schalter oder Stellelement auf, dessen Stellung einen Einfluss auf den LED-Strom I_{LED} bzw. die elektrische Energie zum Betreiben der LED-Strecke 106 hat.

Wie in Fig. 1 gezeigt, wird gemäß der Erfindung die Konverterstufe 105 durch die integrierte Steuerschaltung 103 des PFC-Moduls 103 gesteuert bzw. betrieben. D.h. die integrierte Schaltung 103 steuert den wenigstens einen Schalter der Konverterstufe 105, um den LED-Strom bzw. die elektrische Energie einzustellen, mit der die LED-Strecke 106 betrieben werden soll. Vorzugsweise kann die integrierte Schaltung 103 zur Einstellung und/oder Regelung getakteter Baugruppen und nicht getakteter Baugruppen in der Konverterstufe 105 verwendet werden.

Die integrierte Schaltung 103 führt somit wenigstens ein Signal 111 der Konverterstufe 105 zu, um den Strom I_{LED} bzw. die elektrische Energie einzustellen bzw. zu regeln, die der LED-strecke 106 zugeführt wird. Dafür werden erfindungsgemäß wenigstens eine Rückführgröße bzw. Signal 112 von der Konverterstufe 105 und/oder wenigstens eine Rückführgröße bzw. Signal 113 von der LED-Strecke 106 der integrierten Schaltung 103 zugeführt. Diese Rückführgrößen 112 und 113 stellen Informationen bzgl. der Konverterstufe 105 und der Last, d.h. der LED-Strecke 106, dar.

Zum Beispiel können die wenigstens eine Rückführgröße 112 und die wenigstens eine Rückführgröße 113 den LED-Strom, die LED-Spannung, die Temperatur der LED-Strecke 106, die von der LED-Strecke 106 emittierte Lichtleistung, die von der Konverterstufe 105 aufgenommene elektrische Energie/Leistung, die von der LED-Strecke 106 aufgenommene elektrische Energie/Leistung, usw. wiedergeben.

Erfindungsgemäß können die wenigstens eine Rückführgröße 112 und die wenigstens eine Rückführgröße 113 jede Rückführgröße sein, die durch die integrierte Schaltung 103 dazu verwendet werden kann, um mittels Steuerung bzw. Regelung der PFC-Schaltung 104 und/oder der wenigstens einen Konverterstufe 105 die der LED-Strecke 106 zugeführte elektrische Energie/Leistung einzustellen.

Die wenigstens eine Rückführgröße 112 und 113 kann auf jede dem Fachmann bekannten Art und Weise gemessen bzw. erzeugt werden und der integrierten Schaltung 103 zugeführt werden.

Der integrierten Schaltung 103 können erfindungsgemäß auch von außerhalb des Systems 101 (von extern) Signale, Informationen oder Befehle 114 zugeführt werden. Zum Beispiel können Dimmbefehle- bzw. -informationen für den Betrieb der LED-strecke 106 von extern der integrierten Schaltung 103 zugeführt werden oder es kann ein Sollwert für die Ausgangsspannung V_{BUS} der PFC-Schaltung 104 von extern der integrierten Schaltung 103 zugeführt werden.

Die integrierte Steuerschaltung 103 kann ebenfalls Informationen über die PFC-Schaltung 104, die wenigstens eine Konverterstufe 105 und LED-Strecke 106 nach außerhalb des Systems 101 bereitstellen. D.h. die integrierte Schaltung 103 weist eine bidirektionale Kommunikationsschnittstelle auf, über die Informationen sowohl von extern (außerhalb des Systems 101) zu der integrierten Schaltung 103 wie auch von der integrierten Schaltung 103 nach extern kommuniziert werden können. Diese Kommunikation kann auf jede dem Fachmann bekannte Art und Weise erfolgen, z.B. gemäß dem DALI-Standard.

Erfindungsgemäß kann in dem System 101, dem PFC-Modul 102, der integrierten Schaltung 103, der PFC-Schaltung 104, der wenigstens einen Konverterstufe 105 und der LED-Strecke 106 ein Speicher vorgesehen sein, um die von der PFC-Schaltung 104, der wenigstens einen Konverterstufe 105, der LED-Strecke 106 zugeführten Informationen, wie zum Beispiel die Rückführgrößen 107, 109, 110, 112 und 113, zu speichern. Ferner können auch von außerhalb des Systems 101 der integrierten Schaltung 103 zugeführte Informationen, wie zum Beispiel Dimminformationen zum Dimmen der LED-Strecke oder ein Sollwert für die Ausgangsspannung V_{BUS}, in dem Speicher gespeichert werden. Es können in dem Speicher auch andere Informationen bezüglich der Steuerung bzw. Regelung der PFC-Schaltung 104 und Konverterstufe 105 gespeichert werden, wie zum Beispiel Dimmvorgaben oder in der integrierten Schaltung bestimmte bzw. berechnete Parameter. Ein solcher Parameter kann zum Beispiel die Einschaltzeit t_{ON} des wenigstens einen Schalters der PFC-Schaltung 104 oder des wenigstens einen Schalters der Konverterstufe 105 sein.

Die integrierte Schaltung ist dann in der Lage für eine Steuerung bzw. einen Betrieb der PFC-Schaltung 104 und/oder der Konverterstufe 105 sowohl Informationen in den Speicher zu speichern/schreiben wie auch Informationen aus dem Speicher zu laden/lesen.

Die LED-Strecke 106 weist eine oder mehrere LEDs auf, die parallel und/oder seriell angeordnet sein können. Erfindungsgemäß kann jede dem Fachmann bekannte LED auf jede dem Fachmann bekannten Art und Weise in der LED-Strecke 106 angeordnet sein. Die emittierte Lichtleistung der einen oder mehreren LEDs der LED-Strecke 106 hängt in bekannter Weise von dem LED-Strom bzw. der elektrischen Energie ab, die der LED-Strecke 106 zugeführt wird. Folglich kann die integrierte Schaltung 103 durch Steuerung der PFC-Schaltung 104 und/oder der wenigstens einen Konverterstufe 105 die durch die LED-Strecke 106 emittierte Lichtleistung einstellen.

Gemäß der Erfindung kann die integrierte Schaltung 103, die den wenigstens einen Schalter der aktiv getakteten PFC-Schaltung 104 ansteuert, auch Rückführgrößen aus dem Bereich der LED-Strecke 106 erhalten und abhängig davon eine weitere Konverterstufe 105, welche getaktet oder nicht getaktet ist, stellen oder regeln.

Wenn also die integrierte Steuerschaltung 103 neben der PFC-Schaltung 104 auch die wenigstens eine Konverterstufe 105 stellt oder regelt, ist der aktuelle Zustand der wenigstens einen Konverterstufe 105 bekannt, wodurch eine schnelle Lastanpassung im Bereich der PFC-Schaltung 104 erfolgen kann. D.h. die integrierte Schaltung 103 kann für die Steuerung der PFC-Schaltung 104 die Rückführgrößen 112 und 113 von der Konverterstufe 105 und der LED-Strecke 106 verwenden.

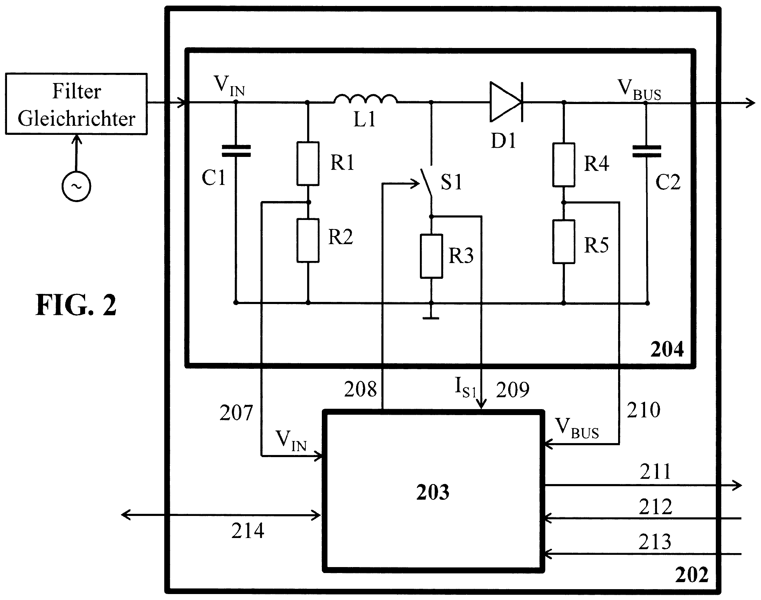

Fig. 2 zeigt schematisch ein erstes bevorzugtes Ausführungsbeispiel des erfindungsgemäßen PFC-Moduls, wobei die vorstehenden Ausführungen bezüglich der Fig. 1 auch für das PFC-Modul 202 der Fig. 2 gültig sind. Folglich werden im Folgenden hauptsächlich neue Aspekte des erfindungsgemäßen PFC-Moduls 202 diskutiert. Die letzten beiden Ziffern der Bezugszeichen für die Elemente der Fig. 2 entsprechen den letzten beiden Ziffern der Bezugszeichen der entsprechenden Elemente der Fig. 1.

In Fig. 2 entspricht die aktiv getaktete PFC-Schaltung 204 einer Boost-PFC-Schaltung. Wie bereits vorstehend erwähnt, kann die PFC-Schaltung 204 aber erfindungsgemäß jede dem Fachmann bekannte aktiv getaktete PFC-Schaltung sein.

Die Spule L1 wird geladen, wenn der Schalter S1 geschlossen ist, und wird wieder entladen, wenn der Schalter S1 geöffnet ist. Durch das Laden und Entladen der Spule L1 wird in jedem Schaltzyklus die Kapazität C2 über die Diode D1 mit elektrischer Energie geladen und es wird eine der Taktung des Schalters S1 durch die integrierte Schaltung 203 entsprechende Ausgangsspannung V_{BUS} eingestellt. Der Schalter S1 ist vorzugsweise ein Transistor, wie zum Beispiel ein MOSFET.

Gemäß der Fig. 2 wird die Eingangsspannung V_{IN} der PFC-Schaltung 204 über einen Spannungsteiler bestehend aus den Widerständen R1 und R2 gemessen und der integrierten Steuerschaltung 203 als Rückführgröße bzw. Signal 207 zugeführt. Der im geschlossenen Zustand durch den Schalter S1 fließende Strom I_{S1} wird über den Widerstand bzw. Shunt-Widerstand R3 gemessen und als Rückführgröße bzw. Signal 209 der integrierten Schaltung 203 zugeführt. Die Ausgangsspannung V_{BUS} der PFC-Schaltung 204 wird über einen Spannungsteiler bestehend aus den Widerständen R4 und R5 gemessen und der integrierten Steuerschaltung 203 als Rückführgröße bzw. Signal 210 zugeführt.

Wie bereits vorstehend erwähnt, können die Rückführgrößen 207, 209 und 210 auch durch jede dem Fachmann andere Art und Weise gemessen bzw. erzeugt werden. D.h. die PFC-Schaltung 202 kann jede dem Fachmann bekannte Einrichtung zur Messung und Erzeugung der Rückführgrößen 207, 209 und 210 aufweisen. Ferner können auch noch weitere Rückführgrößen von der PFC-Schaltung 204 der integrierten Schaltung 203 zugeführt werden.

Erfindungsgemäß betreibt die integrierte Schaltung 203 die PFC-Schaltung 204 im Lückbetrieb bei einer festen Betriebsfrequenz. Dazu führt die integrierte Schaltung 203 der PFC-Schaltung 204 ein Taktsignal 208 zur Taktung des Schalters S1 zu. Über die Einstellung der Einschaltzeit t_{ON} des Schalters S1 kann die Ladezeit der Spule L1, d.h. die Zeit während der die Spule L1 geladen wird, eingestellt werden. Somit kann über die Einstellung der Einschaltzeit t_{ON} des Schalters S1 die von dem Eingang zu dem Ausgang der PFC-Schaltung 204 weitergeleitete elektrische Energie eingestellt werden.

Die Einschaltzeit t_{ON} und die Ausschaltzeit t_{OFF} des Schalters S1 entsprechen zusammen in bekannter Weise der Periode T des Taktsignals bzw. dem Inversen der Betriebsfrequenz f, mit der der Schalter S1 der PFC-Schaltung 204 durch die integrierte Schaltung 203 getaktet bzw. betrieben wird (1/f = T = t_{ON} + t_{OFF}). Da gemäß der Erfindung der Schalter S1 im Lückbetrieb bei fester Betriebsfrequenz betrieben wird, ändert sich die Ausschaltzeit t_{OFF} des Schalters, wenn die Einschaltzeit t_{ON} geändert wird. Während der Einschaltzeit t_{ON} des Schalters S1 (Schalter S1 geschlossen/im leitenden Zustand) fließt ein Strom durch die Spule L1 und den Schalter S1, wobei die Spule L1 geladen wird. Während der Ausschaltzeit t_{OFF} des Schalters S1 (Schalter S1 offen/ im nicht-leitenden Zustand) fließt ein Strom von der Spule L1 durch die Diode D1, wobei die Spule L1 entladen wird und die Kapazität C2 geladen wird.

Für den Lückbetrieb ist charakteristisch, dass während der Ausschaltzeit t_{OFF} eine Totzeit t_{TOT} besteht, während der kein Stromfluss durch die Spule L1, d.h. kein Ladestrom oder Entladestrom, vorhanden ist.

Die integrierte Schaltung 203 steuert bzw. regelt den Schalter S1 auf der Basis der die Eingangsspannung V_{IN} der PFC-Schaltung 204 widergebenden Rückführgröße 207 und der die Ausgangsspannung V_{BUS} der PFC-Schaltung 204 wiedergebenden Rückführgröße 210 derart im Lückbetrieb bei einer fester Frequenz, dass der durch die PFC-Schaltung 204 aufgenommene Strom an eine sinusförmige Hüllkurve angepasst ist und eine bestimmte, zum Beispiel einem Sollwert entsprechende, Ausgangsspannung V_{BUS} eingestellt wird.

Durch Einstellen der Einschaltzeit t_{ON} kann die integrierte Steuerschaltung 203 in jedem Schaltzyklus den aufgenommenen Strom an die sinusförmige Hüllkurve anpassen, um einen Leistungsfaktor nahezu 1 zu erreichen und die am Ausgang der PFC-Schaltung 204 bereitgestellte Ausgangsspannung V_{BUS} einzustellen. Somit kann dadurch auch die elektrische Energie eingestellt werden die am Ausgang der PFC-Schaltung 204 bereitgestellt wird.

Gemäß Fig. 2 weist die integrierte Schaltung 203 wenigstens zwei Eingangspins auf, um die Eingangsspannung V_{IN} und die Ausgangsspannung V_{BUS} der integrierten Steuerschaltung als Rückführgrößen zuzuführen.

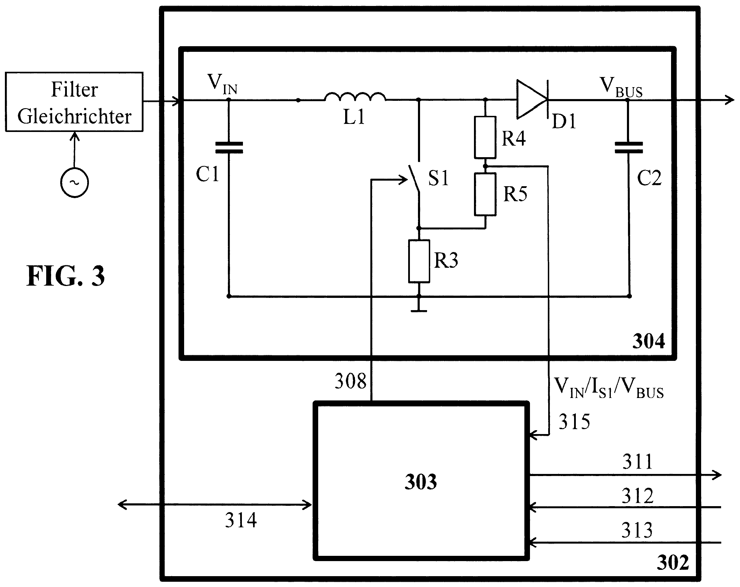

Gemäß der Erfindung kann aber die integrierte Schaltung 203 auch nur einen Eingangspin aufweisen, um eine die Eingangsspannung V_{IN} und die Ausgangsspannung V_{BUS} wiedergebende Rückführgröße der integrierten Steuerschaltung zuzuführen. Dies ist in Fig. 3 gezeigt.

Die vorstehenden Ausführungen bezüglich der Figs. 1 und 2 sind ebenfalls für das PFC-Modul gemäß Fig. 3 gültig. Die letzten beiden Ziffern der Bezugszeichen für die Elemente der Fig. 3 entsprechen den letzten beiden Ziffern der Bezugszeichen der entsprechenden Elemente der Figs. 1 und 2.

Das PFC-Modul 302 gemäß Fig. 3 unterscheidet sich von dem PFC-Modul 202 gemäß Fig. 2 darin, dass die Eingangsspannung V_{IN}, der durch die Schaltung S1 im geschlossenen Zustand fließende Strom I_{S1} sowie die Ausgangsspannung V_{BUS} mittels einer einzelnen Rückführgröße bzw. Signals 315 von der PFC-Schaltung 304 der integrierten Schaltung 303 zugeführt werden.

Dazu ist der Spannungsteiler bestehend aus den Wiederständen R4 und R5 parallel zu dem Schalter S1 vor der Diode D1 angeordnet. Der Spannungsteiler bestehend aus den Widerständen R1 und R2 zur Erfassung der Eingangsspannung V_{IN} gemäß Fig. 2 wird nun nicht mehr benötigt. Dies ist vorteilhaft, da dadurch Bauelemente eingespart werden können.

Gemäß der Erfindung kann die Eingangsspannung V_{IN} und die Ausgangsspannung V_{BUS} auf jede dem Fachmann bekannte Art und Weise derart erfasst werden, dass eine einzelne diese beiden Spannungen wiedergebende Rückführgröße 315 von der PFC-Schaltung 304 zu der integrierten Schaltung 303 zugeführt wird. D.h. das zu einem Zeitpunkt während eines Schaltzyklus des Schalters S1 die Rückführgröße 115 die Eingangsspannung V_{IN} wiedergibt und zu einem anderen Zeitpunkt während des Schaltzyklus des Schalters S1 die Rückführgröße 115 die Ausgangsspannung V_{BUS} wiedergibt.

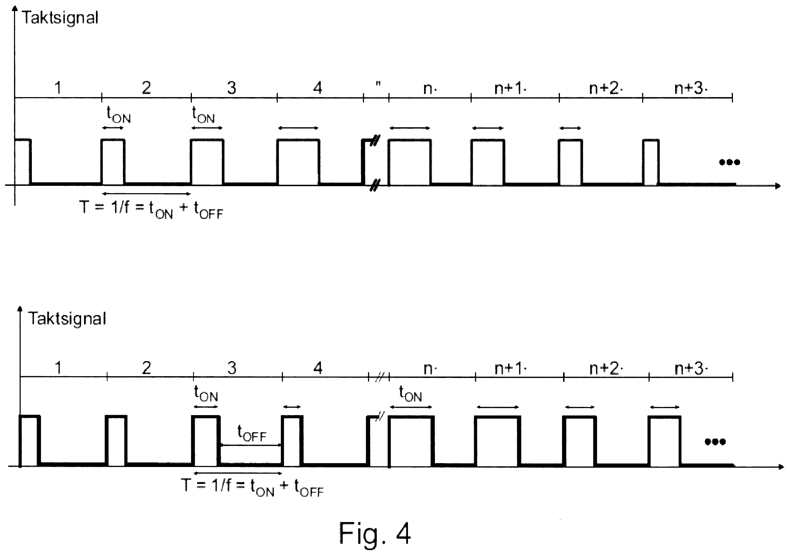

Fig. 4 zeigt schematisch das durch die integrierte Steuerschaltung des erfindungsgemäßen PFC-Moduls erzeugte Taktsignal (unterer Graph) zum Steuern bzw. Takten des wenigstens einen Schalters der PFC-Schaltung des erfindungsgemäßen PFC-Moduls im Lückbetrieb bei fester Frequenz sowie ein Taktsignal (oberer Graph) zum Steuern eines Schalters einer PFC-Schaltung im Lückbetrieb bei fester Frequenz gemäß dem Stand der Technik.

Gemäß dem Stand der Technik wird in jedem Schaltzyklus des wenigstens einen Schalters S1 der PFC-Schaltung die Einschaltzeit t_{ON} abhängig von dem aktuellen Zustand der Eingangsspannung V_{IN} berechnet, um den durch die PFC-Schaltung aufgenommenen Strom an die aktuelle Amplitude der sinusförmigen Eingangsspannung V_{IN} anzupassen. D.h. die Einschaltzeit t_{ON} wird auf einer "cycle-by-cycle" Basis berechnet.

Gemäß der Erfindung berechnet bzw. bestimmt die integrierte Steuerschaltung ebenfalls die Einschaltzeit t_{ON} abhängig von der Amplitude der Eingangsspannung V_{IN}, wobei die integrierte Steuerschaltung die Einschaltzeit t_{ON} aber für wenigstens zwei aufeinanderfolgende Schaltzyklen innerhalb einer Halbwelle der Eingangsspannung V_{IN} konstant hält. D.h. gemäß der Erfindung stellt die integrierte Schaltung die Einschaltzeit t_{ON} nur für jeden zweiten Schaltzyklus innerhalb einer Halbwelle der Eingangsspannung V_{IN} ein.

Erfindungsgemäß kann die Einschaltzeit t_{ON} auch für mehr als 2 aufeinanderfolgende Schaltzyklen, vorzugsweise maximal 15 Schaltzyklen, mehr bevorzugt maximal 10 Schaltzyklen innerhalb einer Halbwelle der Eingangsspannung V_{IN} konstant gehalten werden, sodass noch ein ausreichend guter Leistungsfaktor gewährleistet werden kann.

Daher erfolgt die Regelung der Einschaltzeit t_{ON} durch die integrierte Schaltung/Steuerschaltung zur Anpassung an die aktuelle Amplitude der Halbwelle der Eingangsspannung V_{IN} nicht bei jedem Schaltzyklus, sondern nur bei jedem n-ten Schaltzyklus, wobei n größer gleich 2 (n ≥ 2) sein kann und vorzugsweise nicht größer als 15 (n < 15) ist. Somit ergeben sich "Scheiben" aufweisend wenigstens zwei oder mehrere Schaltzyklen bzw. Einschaltzyklen, wobei während dieser Scheiben die Einschaltzeitdauer t_{ON} des PFC-Schalters S1 nicht verändert wird. Es entstehen also Pakete an Schaltzyklen bzw. Einschaltzyklen mit konstanter Einschaltzeitdauer t_{ON}, d.h. erfindungsgemäß stellt die integrierte Schaltung die Einschaltzeit t_{ON} innerhalb einer Halbwelle der Eingangsspannung V_{IN} nicht "cycle-bycylce", sondern paketweise ein.

Dieser Unterschied in der Einstellung der Einschaltzeit t_{ON} innerhalb einer Halbwelle der Eingangsspannung V_{IN} ist in Fig. 4 ersichtlich. Der obere Graph zeigt den Stand der Technik: Bei jedem Taktsignal, d.h. bei jedem Schaltzyklus, innerhalb einer Halbwelle der Eingangsspannung V_{IN} wird die Einschaltzeit t_{ON} eingestellt bzw. an die aktuelle Amplitude der Eingangsspannung V_{IN} angepasst. Je größer die Amplitude der Eingangsspannung V_{IN} ist, desto größer wird die Einschaltzeit t_{ON} eingestellt. D.h. innerhalb einer Halbwelle der Eingangsspannung wird die Einschaltzeit t_{ON} zunächst bei jedem Einschaltzyklus vergrößert bis die maximale Amplitude der Halbwelle der Eingangsspannung erreicht ist. Danach wird die Einschaltzeit t_{ON} bei jedem Schaltzyklus wieder verkleinert.

Der untere Graph der Fig. 4 zeigt die erfindungsgemäße Einstellung der Einschaltzeit t_{ON} durch die integrierte Steuerschaltung: Bei jedem zweiten Schaltzyklus bzw. Taktzyklus (1., 3., n. und n+2. Schaltzyklus) innerhalb einer Halbwelle der Eingangsspannung V_{IN} wird die Einschaltzeit t_{ON} abhängig von der Amplitude der Eingangsspannung V_{IN} eingestellt. D.h. die Einschaltzeit t_{ON} wird erfindungsgemäß für wenigstens zwei aufeinanderfolgende Taktzyklen (z.B. 1. und 2., 3. und 4., n. und n+1. usw.) konstant gehalten.

Wie bereits vorstehend erwähnt kann erfindungsgemäß die Einschaltzeit tₒₙ durch die integrierte Schaltung bei jedem n-ten Schaltzyklus eingestellt werden bzw. für n aufeinanderfolgende Schaltzyklen/Taktzyklen konstant gehalten werden, wobei n größer gleich 2 (n ≥ 2) sein kann und vorzugsweise nicht größer als 15 (n < 15) ist.

Ferner kann erfindungsgemäß die integrierte Schaltung die Einschaltzeit t_{ON} des Schalters S1 der PFC-Schaltung auch abhängig von der Ausgangsspannung V_{BUS} der PFC-Schaltung einstellen, so dass der Istwert der Ausgangspannung Vaus einem Sollwert entspricht.

Der Vorteil der erfindungsgemäßen Einstellung der Einschaltzeit t_{ON} besteht darin, dass als integrierte Schaltung zum Betreiben der PFC-Schaltung ein Mikrokontroller, vorzugsweise ein kostengünstiger, einfacher Mikrokontroller, verwendet werden kann.

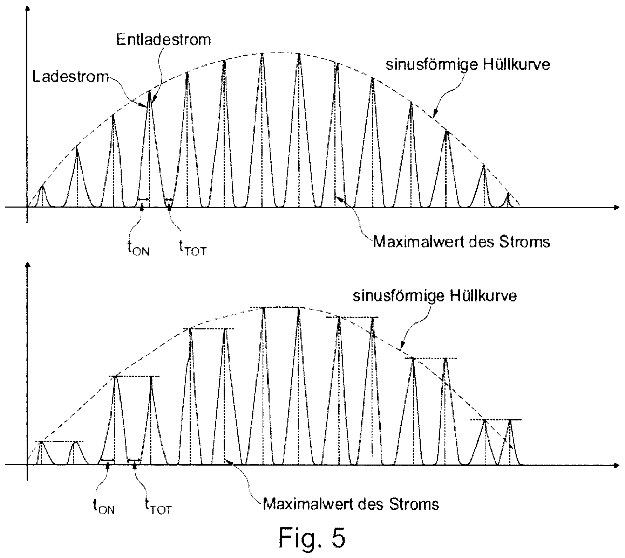

Fig. 5 zeigt schematisch die Anpassung des durch die PFC-Schaltung des erfindungsgemäßen PFC-Moduls aufgenommenen Stroms an eine sinusförmige Hüllkurve bzw. an eine Halbwelle einer sinusförmigen Hüllkurve, wenn die PFC-Schaltung im Lückbetrieb bei fester Frequenz gemäß der Erfindung (unterer Graph) bzw. gemäß dem Stand der Technik (oberer Graph) betrieben wird. Der obere Graph der Fig. 5 zeigt die Anpassung des durch die PFC-Schaltung aufgenommenen Stroms an eine sinusförmige Hüllkurve, bei Taktung des Schalter S1 der PFC-Schaltung mit einem Taktsignal gemäß dem oberen Graphen der Fig. 4. Entsprechend zeigt der untere Graph die Anpassung des durch die PFC-Schaltung aufgenommenen Stroms an eine sinusförmige Hüllkurve, bei Taktung des Schalter S1 der PFC-Schaltung mit einem Taktsignal gemäß dem unteren Graphen der Fig. 4.

In beiden Graphen der Fig. 5 ist der Zusammenhang zwischen der sinusförmigen Hüllkurve und dem Strom durch die Spule L1 bzw. dem Spulenstrom der PFC-Schaltung gezeigt, wobei die steigende Flanken des Dreiecksignals bzw. der dreieckigen Wellenformen dem Ladestrom durch die Spule L1 entsprechen und entsprechend die fallenden Flanken dem Entladestrom durch die Spule L1 entsprechen. Beide Figuren zeigen nur schematisch die Anpassung des durch die PFC-Schaltung aufgenommenen Stroms bzw. des Spulenstroms an die sinusförmige Hüllkurve, da der wenigstens eine Schalter S1 der PFC-Schaltung mit einer viel größeren Betriebsfrequenz betrieben wird als die Frequenz der Eingangsspannung V_{IN} der PFC-Schaltung bzw. der sinusförmigen Hüllkurve, so dass in Wirklichkeit innerhalb einer Halbwelle der sinusförmigen Hüllkurve eine weit größere Anzahl an dreieckigen Wellenformen vorhanden ist als in Fig. 5 gezeigt.

Ferner kann man in den beiden Graphen der Fig. 5 erkennen, dass in jedem Schaltzyklus eine Zeit bzw. Totzeit t_{TOT} vorhanden ist, während der kein Strom durch die Spule der PFC-Schaltung fließt. Dies ist charakteristisch für einen Betrieb der PFC-Schaltung im Lückbetrieb.

In dem oberen Graph erkennt man, dass aufgrund der Anpassung der Einschaltzeit t_{ON} des Schalter S1 der PFC-Schaltung an die Amplitude der Eingangsspannung V_{IN} bei jedem Schaltzyklus bzw. Taktzyklus, der Maximalwert des Stroms in jedem Schaltzyklus an die Halbwelle der sinusförmigen Hüllkurve angepasst ist.

In dem unteren Graphen erkennt man, dass aufgrund der erfindungsgemäßen Anpassung der Einschaltzeit t_{ON} des Schalter S1 der PFC-Schaltung an die Amplitude der Eingangsspannung V_{IN} bei jedem zweiten Schaltzyklus, der Maximalwert des Stroms in nur jedem zweiten Schaltzyklus an die Halbwelle der sinusförmigen Hüllkurve angepasst ist. D.h. es gibt Schaltzyklen in denen ist der Maximalwert des Stroms kleiner als die Hüllkurve und es gibt Schaltzyklen in denen ist der Maximalwert des Stroms größer als die Hüllkurve.

Gemäß der Erfindungen kann, wie bereits vorstehend erwähnt, die Einschaltzeit t_{ON} bei jedem n-ten Schaltzyklus eingestellt werden bzw. für n aufeinanderfolgende Taktzyklen konstant gehalten werden, wobei n größer gleich 2 (n ≥ 2) sein kann und vorzugsweise nicht größer als 15 (n < 15) ist.

Das bedeutet, dass in dem unteren Graphen erfindungsgemäß n aufeinanderfolgende Schaltzyklen bzw. n aufeinanderfolgende dreieckige Wellenformen den nahezu gleichen maximalen Strom aufweisen können.

Aufgrund der sich ändernden Eingangsspannung V_{IN} wird sich der maximale Strom bzw. Spitzenstrom trotzdem ändern, wenn die Einschaltzeit t_{ON} nur bei jedem n-ten Schaltzyklus eingestellt wird bzw. für n aufeinanderfolgende Taktzyklen konstant gehalten wird.

Der maximale Strom bzw. Spitzenstrom ist aber grundsätzlich durch die Anpassung der Einschaltzeit t_{ON} beeinflusst, d.h. wenn die Einschaltzeit t_{ON} des Schalters S1 der PFC-Schaltung in einem Schaltzyklus, z.B. in jedem n-ten Schaltzyklus, an die Amplitude der Eingangsspannung V_{IN} angepasst wird, dann wird der Maximalwert des Stroms bzw. der Spitzenstrom in diesem Schaltzyklus an die Halbwelle der sinusförmigen Hüllkurve angepasst. Folglich wird grundsätzlich der Maximalwert des Stroms bzw. der Spitzenstrom in einem Schaltzyklus durch die Einschaltzeit t_{ON} des Schalters in diesem Schaltzyklus bestimmt, wobei eine Änderung der Eingangsspannung V_{IN} auch einen gewissen Einfluss auf den Spitzenstrom hat.

Daher wird sich der Spitzenstrom während den n aufeinanderfolgende Schaltzyklen bzw. n aufeinanderfolgende dreieckige Wellenformen aufgrund der sich ändernden Eingangsspannung V_{IN} trotzdem ändern (aber beeinflusst durch die Anpassung der Einschaltzeit t_{ON}), wenn die Einschaltzeit t_{ON} nur bei jedem n-ten Schaltzyklus eingestellt wird bzw. für n aufeinanderfolgende Taktzyklen konstant gehalten wird.

Erfindungsgemäß können also n aufeinanderfolgende Schaltzyklen bzw. n aufeinanderfolgende dreieckige Wellenformen einen nahezu gleichen maximalen Strom bzw. Spitzen aufweisen.

Somit ändert sich trotzdem während den n aufeinanderfolgende Schaltzyklen der maximale Strom bzw. Spitzenstrom aufgrund der sich ändernden Eingangsspannung V_{IN}, wobei der Spitzenstrom grundsätzlich durch die Anpassung der Einschaltzeit t_{ON} des Schalters der PFC-Schaltung beeinflusst bzw. eingestellt wird.

Obwohl bei einer konstanten Einschaltzeit t_{ON} während n aufeinanderfolgenden Schaltzyklen der Strom für n-1 Schaltzyklen nicht exakt der sinusförmigen Hüllkurve entspricht, kann ein ausreichend guter Leistungsfaktor erzielt werden.

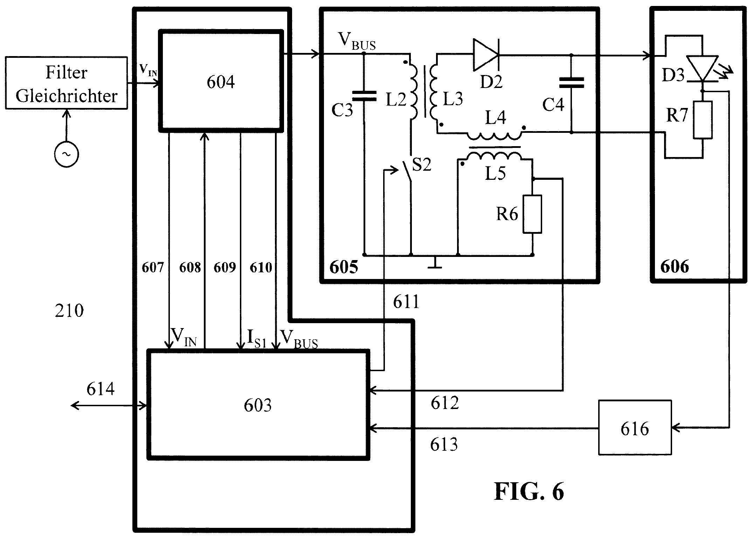

Fig. 6 zeigt schematisch ein bevorzugtes Ausführungsbeispiel der wenigstens einen Konverterstufe des erfindungsgemäßen Systems, wobei die vorstehenden Ausführungen bezüglich der Figs. 1 bis 5 auch für das System sowie der Konverterstufe 605 der Fig. 6 gültig sind. Folglich werden im Folgenden hauptsächlich neue Aspekte bezüglich des erfindungsgemäßen Systems und der Konverterstufe 605 diskutiert. Die letzten beiden Ziffern der Bezugszeichen für die Elemente der Fig. 6 entsprechen den letzten beiden Ziffern der Bezugszeichen der entsprechenden Elemente der Figs. 1-3.

In Fig. 6 entspricht die Konverterstufe 605 einem Sperrwandler bzw. Flyback-Konverter. Wie bereits vorstehend erwähnt, kann die Konverterstufe 605 aber erfindungsgemäß jede dem Fachmann bekannte getaktete oder nicht getaktete Konverterstufe sein, die in der Lage ist einen LED-Strom bzw. elektrische Energie zum Betreiben der LED-Strecke 606 bereitzustellen, wie zum Beispiel primär oder sekundär getaktete Wandler/Konverter oder Linearstromquellen.

Gemäß der Erfindung steuert bzw. betreibt die integrierte Schaltung/Steuerschaltung 603, die die PFC-Schaltung 604 betreibt, auch die Konverterstufe 605. Gemäß Fig. 6 führt die integrierte Schaltung 603 dem Schalter S2 der Konverterstufe 605 ein Signal bzw. Taktsignal 611 zu. Der Schalter S2 ist vorzugsweise ein Transistor, wie zum Beispiel ein MOSFET.

Durch Einstellen der Einschaltzeit t_{ON} des Schalters S2, d.h. der Zeitdauer für die der Schalter S2 leitend geschalten wird, kann die integrierte Schaltung 603 die Leistungsaufnahme der Konverterstufe 605 und damit den LED-Strom I_{LED} bzw. die elektrische Energie, die der LED-Strecke 606 bereitgestellt wird einstellen. Alternativ kann die integrierte Schaltung 603 aber auch anstelle der Einschaltzeit tₒₙ des Schalters S2 dessen Tastverhältnis, d.h. das Verhältnis zwischen der Periode T des Taktsignals 611 und der Einschaltzeit t_{ON}, bzw. dessen Betriebsfrequenz einstellen.

Das Signal bzw. Taktsignal 611 kann erfindungsgemäß durch die integrierte Schaltung 603 auf der Basis wenigstens einer Rückführgröße 612 von der Konverterstufe 605 und/oder wenigstens einer Rückführgröße 613 von der LED-Strecke 606 bestimmt bzw. berechnet werden.

Gemäß Fig. 6 wird über einen Messtransformator mit der Primärspule L4 und der Sekundärspule L5 und dem Widerstand R6 der LED-Strom gemessen und als Rückführgröße bzw. Signal 612 von der Konverterstufe 605 der integrierten Schaltung 603 zugeführt. Ferner wird über den Widerstand R7, vorzugsweise ein Shunt-Widerstand, der LED-Strom gemessen und als Rückführgröße bzw. Signal 613 von der LED-Strecke 606 zu der integrierten Schaltung 603 zugeführt. Optional kann ein Optokoppler oder jedes andere dem Fachmann bekannte galvanisch trennende Element 616 für die Zurückführung der Rückführgröße 613 von der LED-Strecke 606 zu der integrierten Schaltung 603 verwendet werden.

Wie bereits vorstehend erwähnt, können erfindungsgemäß verschiedene physikalische Größen bzw. Parameter in der Konverterstufe 605 und der LED-Strecke 606 erfasst werden und auf jede dem Fachmann bekannte Art und Weise als Rückführgrößen für eine Bestimmung bzw. Berechnung des Taktsignals 611 der integrierten Schaltung 603 zugeführt werden. Dazu können die Konverterstufe 605 und die LED-Strecke 606 jedes dem Fachmann bekannte Element zum Erfassen von physikalischen Größen bzw. Parametern aufweisen. Zum Beispiel kann die LED-Strecke eine Einrichtung bzw. einen Sensor zur Erfassung der von der einen oder mehreren LEDs der LED-Strecke 606 emittierten Lichtleistung aufweisen, wobei der Sensor die Lichtleistung erfasst und eine die Lichtleistung wiedergebende Rückführgröße bzw. Signal 613 der integrierten Schaltung 603 zugeführt wird.

Ferner können gemäß der Erfindung die Rückführgrößen 612 und 613 durch die integrierte Schaltung 603 zum Steuern bzw. Betreiben der PFC-Schaltung 604 verwendet werden. Dadurch kann der Betrieb der PFC-Schaltung auf sich veränderte Lastbedingungen, wie zum Beispiel ein Dimmen der LED-Strecke, angepasst werden. Folglich kann die durch die PFC-Schaltung aufgenommene elektrische Leistung/Energie und die von der PFC-Schaltung am Ausgang bereitgestellte Ausgangsspannung V_{BUS} oder elektrische Energie an sich veränderte Lastbedingungen angepasst werden. Sich veränderte Lastbedingungen können alle dem Fachmann bekannte Bedingungen sein, wie zum Beispiel ein Dimmen der einen oder mehreren LEDs der LED-Strecke 606, ein Notlichtbetrieb der LED-Strecke 606, eine veränderte Aufnahme elektrischer Energie bzw. Leistung durch die LED-Strecke 606 usw.

Wie vorstehend bereits erwähnt, betreibt die integrierte Schaltung 603 die PFC-Schaltung 604 im Lückbetrieb bei einer festen Betriebsfrequenz bei sich nicht veränderten Eingangsspannungs- und Lastverhältnissen.

Gemäß der Erfindung kann nun die integrierte Schaltung 603 die Betriebsfrequenz der PFC-Schaltung 604 vorzugsweise mit einer Frequenz unterhalb der Frequenz einer Halbwelle der Eingangsspannung V_{IN} der PFC-Schaltung 604 als Anpassung an sich veränderte Eingangsspannungs- und/oder Lastverhältnisse ändern.

Ferner kann erfindungsgemäß die integrierte Schaltung 603 die aktiv getaktete PFC-Schaltung 604, vorzugsweise die Betriebsfrequenz der PFC-Schaltung 604, sowie die Konverterstufe 605 abhängig von der Eingangsspannung V_{IN} der PFC-Schaltung 604, der wenigstens einen Rückführgröße 612 von der Konverterstufe 605 und/oder der wenigstens einen Rückführgröße 613 von der LED-Strecke 606 steuern.

Des Weiteren kann erfindungsgemäß die integrierte Schaltung 603 die Ausgangsspannung V_{BUS} der PFC-Schaltung 604 abhängig von der Eingangsspannung V_{IN} der PFC-Schaltung 604, der wenigstens einen Rückführgröße 612 von der Konverterstufe 605 und/oder der wenigstens einen Rückführgröße 613 von der LED-Strecke 606 steuern bzw. einstellen.

Gemäß der Erfindung kann also die integrierte Steuerschaltung 603 des PFC-Moduls 602 den wenigstens einen Schalter S1 der PFC-Schaltung 604 im Lückbetrieb bei fester Betriebsfrequenz und den wenigstens einen Schalter S2 der Konverterstufe 605 auf der Basis von Rückführgrößen 607, 609, 610, 612 und 613 von der PFC-Schaltung 604, der Konverterstufe 605 und der LED-Strecke 606 sowie Informationen 614 von extern steuern bzw. regeln.

Die feste Betriebsfrequenz der PFC-Schaltung kann durch die integrierte Schaltung 603, vorzugsweise mit einer Frequenz unterhalb der Frequenz einer Halbewelle der Eingangsspannung V_{IN} der PFC-Schaltung 604, als Anpassung an sich veränderte Eingangsspannungs- und/oder Lastverhältnisse, d.h. abhängig von der Eingangsspannung V_{IN} der PFC-Schaltung 604, der wenigstens einen Rückführgröße 612 von der Konverterstufe 605 und/oder der wenigsten einen Rückführgröße 613 von der LED-Strecke 613, geändert werden.

## Patentansprüche

1. System (101) aufweisend,
- ein PFC-Modul (102)
- einen Lastkreis mit einer LED-Strecke (106) mit einer oder mehreren LEDs das PFC-Modul (102) aufweisend eine aktiv getaktete PFC-Schaltung (104) aufweisend wenigstens einen gesteuerten Schalter (S1),
- wobei die aktiv getaktete PFC-Schaltung direkt oder indirekt an den Lastkreis angeschlossen ist, und weiterhin aufweisend
- eine integrierte Schaltung (103), vorzugsweise einen Mikrokontroller, als Steuereinheit, die den wenigstens einen Schalter (S1) der aktiv getakteten PFC-Schaltung (104) mit einer festen Betriebsfrequenz im Lückbetrieb steuert, wobei die integrierte Steuerschaltung (103) dazu angepasst ist, die Einschaltzeit (t_{ON}) des wenigstens einen Schalters (S1) abhängig von der Amplitude der Eingangsspannung (V_{IN}) der aktiv getakteten PFC-Schaltung (104) einzustellen und für zwei aufeinanderfolgende Schaltzyklen innerhalb einer Halbwelle der Eingangsspannung (V_{IN}) die Einschaltzeit (t_{ON}) konstant zu halten, um einen Maximalwert eines durch die PFC-Schaltung (104) aufgenommenen Stroms in jedem zweiten Schaltzyklus an eine Halbwelle einer sinusförmigen Hüllkurve anzupassen,
wobei die integrierte Schaltung (103) dazu angepasst ist, die Einschaltzeit (t_{ON}) des wenigstens einen Schalters (S1) ferner abhängig von der Ausgangsspannung der aktiv getakteten PFC-Schaltung (104) einzustellen, so dass der Istwert der Ausgangsspannung der PFC-Schaltung (104) einem Sollwert entspricht,
- wobei die integrierte Schaltung (103) ferner dazu angepasst ist, um die aktiv getaktete PFC-Schaltung (104) auf der Basis wenigstens einer Rückführgrößen (113) von dem Lastkreis zu steuern,
wobei die wenigstens eine Rückführgröße (113) von dem Lastkreis zumindest eine der folgenden Größen umfasst:
einen LED-Strom, eine LED-Spannung, eine Temperatur der LED-Strecke (106), eine von der LED-Strecke (106) emittierte Lichtleistung oder eine von der LED-Strecke (106) aufgenommene elektrische Leistung.

2. System (101) gemäß einem der vorausgegangenen Ansprüche,
- wobei die integrierte Steuerschaltung wenigstens zwei Eingangspins aufweist, und
- wobei die integrierte Steuerschaltung dazu angepasst ist, über den ersten der wenigstens zwei Eingangspins die Eingangsspannung der PFC-Schaltung zu erfasssen und über den zweiten der wenigstens zwei Eingangspins die Ausgangsspannung der PFC-Schaltung zu erfassen.

3. System (101) gemäß einem der vorausgegangenen Ansprüche,
- wobei die integrierte Schaltung dazu angepasst ist, um die Betriebsfrequenz der PFC-Schaltung mit einer Frequenz unterhalb der Frequenz einer Halbwelle der Eingangsspannung der PFC-Schaltung als Anpassung an sich veränderte Eingangsspannungs- und/oder Lastverhältnisse zu ändern.

4. System (101) gemäß einem der vorausgegangenen Ansprüche, weiterhin aufweisend
- wenigstens eine Konverterstufe (105) mit wenigstens einem zweiten Schalter (S2) zum Betreiben des Lastkreises,
- wobei die wenigstens eine Konverterstufe (105) direkt oder indirekt an die PFC-Schaltung (104) angeschlossen ist,
- wobei die integrierte Schaltung weiterhin dazu eingerichtet ist, die wenigstens eine Konverterstufe (105) abhängig von den Eingangsspannungs- und/oder Lastverhältnissen steuert, und
- wobei die integrierte Schaltung (103) den wenigstens einen zweiten Schalter (S2) der wenigstens einen Konverterstufe (105) zum Einstellen der durch die LED-Strecke (106) abgegebenen Lichtleistung steuert.

5. System gemäß Anspruch 4, wobei die integrierte Steuerschaltung wenigstens eine erste Rückführgröße von der wenigstens einen Konverterstufe und/oder wenigstens eine zweite Rückführgröße von der durch die wenigsten eine Konverterstufe betreibbaren LED-Strecke erfasst.

6. System gemäß Anspruch 5,
- wobei die integrierte Steuerschaltung die aktiv getaktete PFC-Schaltung, vorzugsweise die Betriebsfrequenz der aktiv getakteten PFC-Schaltung, und die wenigstens eine Konverterstufe abhängig von der Eingangsspannung der aktiv getakteten PFC-Schaltung, der wenigstens einen ersten Rückführgröße und/oder der wenigstens einen zweiten Rückführgröße steuert.

7. System gemäß Anspruch 5 oder 6,
- wobei die Ausgangsspannung der aktiv getakteten PFC-Schaltung der Eingangsspannung der wenigstens einen Konverterstufe entspricht, und
- wobei die integrierte Steuerschaltung die Ausgangsspannung der aktiv getakteten PFC-Schaltung abhängig von der Eingangsspannung der aktiv getakteten PFC-Schaltung, der wenigstens einen ersten Rückführgröße und/oder der wenigstens einen zweiten Rückführgröße steuert.

8. System gemäß einem der Ansprüche 5 bis 7,
- wobei die integrierte Steuerschaltung die Betriebsfrequenz der PFC-Schaltung mit einer Frequenz unterhalb der Frequenz einer Halbwelle der Eingangsspannung der aktiv getakteten PFC-Schaltung abhängig von der Eingangsspannung der aktiv getakteten PFC-Schaltung, der wenigstens einen ersten Rückführgröße und/oder der wenigstens einen zweiten Rückführgröße ändert.

9. Beleuchtungsvorrichtung, mit
- einem System (101) gemäß einem der Ansprüche 1 bis 3,
- wobei das PFC-Modul (102) dazu eingerichtet ist, um die LED-Strecke (106) zu betreiben.

10. Beleuchtungsvorrichtung, mit
- einem System (101) gemäß einem der Ansprüche 4 bis 8,
- wobei das System (101) dazu eingerichtet ist, um die LED-Strecke (106) zu betreiben.

11. Verfahren zum Betreiben eines PFC-Moduls (102) mit einer aktiv getakteten PFC-Schaltung (104) aufweisend wenigstens einen gesteuerten Schalter (S1), und einer integrierten Schaltung (103), vorzugsweise einem Mikrokontroller, als Steuereinheit,
- wobei die aktiv getaktete PFC-Schaltung direkt oder indirekt an einen Lastkreises aufweisend eine LED-Strecke mit einer oder mehreren LEDs angeschlossen ist, und
- wobei die integrierte Schaltung (103) den wenigstens einen Schalter (S1) der aktiv getakteten PFC-Schaltung (104) mit einer festen Betriebsfrequenz im Lückbetrieb steuert,
- wobei die integrierte Steuerschaltung (103) die Einschaltzeit (t_{ON}) des wenigstens einen Schalters (S1) abhängig von der Amplitude der Eingangsspannung (V_{IN}) der aktiv getakteten PFC-Schaltung (104) einstellt und für zwei aufeinanderfolgende Schaltzyklen innerhalb einer Halbwelle der Eingangsspannung (V_{IN}) die Einschaltzeit (t_{ON}) konstant hält, um einen Maximalwert eines durch die PFC-Schaltung (104) aufgenommenen Stroms in jedem zweiten Schaltzyklus an eine Halbwelle einer sinusförmigen Hüllkurve anzupassen,
wobei die integrierte Schaltung (103) die Einschaltzeit (t_{ON}) des wenigstens einen Schalters (S1) ferner abhängig von der Ausgangsspannung der aktiv getakteten PFC-Schaltung (104) einstellt, so dass der Istwert der Ausgangsspannung der PFC-Schaltung (104) einem Sollwert entspricht,
- wobei die integrierte Schaltung (103) ferner dazu angepasst ist, um die aktiv getaktete PFC-Schaltung (104) auf der Basis wenigstens einer Rückführgrößen (113) von dem Lastkreis zu steuern,
wobei die wenigstens eine Rückführgröße (113) von dem Lastkreis zumindest eine der folgenden Größen umfasst:
einen LED-Strom, eine LED-Spannung, eine Temperatur der LED-Strecke (106), eine von der LED-Strecke (106) emittierte Lichtleistung oder eine von der LED-Strecke (106) aufgenommene elektrische Leistung.

## Claims

1. System (101), comprising:
- a PFC module (102)
- a load circuit having an LED track (106) with one or more LEDs, the PFC module (102) comprising an actively clocked PFC circuit (104) having at least one controlled switch (S1),
- wherein the actively clocked PFC circuit is connected directly or indirectly to the load circuit, and further comprising
- an integrated circuit (103), preferably a microcontroller, as a control unit, which controls the at least one switch (S1) of the actively clocked PFC circuit (104) at a fixed operating frequency in the discontinuous current mode (DCM), wherein the integrated control circuit (103) is adjusted to set the switch-on time (t_{ON}) of the at least one switch (S1) according to the amplitude of the input voltage (Vin) of the actively clocked PFC circuit (104) and to keep the switch on-time (t_{ON}) constant for two consecutive switching cycles within a half-wave of the input voltage (V_{IN}) in order to adjust a maximum value of a current received by the PFC circuit (104) in each second switching cycle to a half-wave of a sinusoidal envelope, wherein the integrated circuit (103) is adjusted to set the switch-on time (ton) of the at least one switch (S1) further according to the output voltage of the actively clocked PFC circuit (104), so that the actual value of the output voltage of the PFC circuit (104) corresponds to a setpoint value,
- wherein the integrated circuit (103) is further adjusted to control the actively clocked PFC circuit (104) on the basis of at least one feedback variable (113) from the load circuit, wherein the at least one feedback variable (113) from the load circuit comprises at least one of the following variables:
an LED current, an LED voltage, a temperature of the LED track (106), a light power emitted by the LED track (106), or an electrical power received by the LED track (106).

2. System (101) according to any of the preceding claims,
- wherein the integrated control circuit has at least two input pins, and
- wherein the integrated control circuit is adjusted to detect the input voltage of the PFC circuit via the first of the at least two input pins and to detect the output voltage of the PFC circuit via the second of the at least two input pins.

3. System (101) according to either of the preceding claims,
- wherein the integrated circuit is adjusted to change the operating frequency of the PFC circuit with a frequency below the frequency of a half-wave of the input voltage of the PFC circuit as an adjustment to changed input voltage conditions and/or load conditions.

4. System (101) according to any of the preceding claims, further comprising
- at least one converter stage (105) having at least one second switch (S2) for operating the load circuit,
- wherein the at least one converter stage (105) is directly or indirectly connected to the PFC circuit (104),
- wherein the integrated circuit is further configured to control the at least one converter stage (105) according to the input voltage conditions and/or load conditions, and
- wherein the integrated circuit (103) controls the at least one second switch (S2) of the at least one converter stage (105) for setting the light power emitted by the LED track (106).

5. System according to claim 4, wherein the integrated control circuit detects at least one first feedback variable from the at least one converter stage and/or at least one second feedback variable from the LED track that can be operated by the at least one converter stage.

6. System according to claim 5,
- wherein the integrated control circuit controls the actively clocked PFC circuit, preferably the operating frequency of the actively clocked PFC circuit, and the at least one converter stage according to the input voltage of the actively clocked PFC circuit, the at least one first feedback variable and/or the at least one second feedback variable.

7. System according to either claim 5 or claim 6,
- wherein the output voltage of the actively clocked PFC circuit corresponds to the input voltage of the at least one converter stage, and
- wherein the integrated control circuit controls the output voltage of the actively clocked PFC circuit according to the input voltage of the actively clocked PFC circuit, the at least one first feedback variable and/or the at least one second feedback variable.

8. System according to any of claims 5 to 7,
- wherein the integrated control circuit changes the operating frequency of the PFC circuit with a frequency below the frequency of a half-wave of the input voltage of the actively clocked PFC circuit according to the input voltage of the actively clocked PFC circuit, the at least one first feedback variable and/or the at least one second feedback variable.

9. Lighting device, comprising:
- a system (101) according to any of claims 1 to 3,
- wherein the PFC module (102) is configured to operate the LED track (106).

10. Lighting device, comprising:
- a system (101) according to any of claims 4 to 8,
- wherein the system (101) is configured to operate the LED track (106).

11. Method for operating a PFC module (102) having an actively clocked PFC circuit (104) comprising at least one controlled switch (S1), and an integrated circuit (103), preferably a microcontroller, as a control unit,
- wherein the actively clocked PFC circuit is connected directly or indirectly to a load circuit having an LED track with one or more LEDs, and
- wherein the integrated circuit (103) controls the at least one switch (S1) of the actively clocked PFC circuit (104) at a fixed operating frequency in the discontinuous current mode,
- wherein the integrated control circuit (103) sets the switch-on time (t_{ON}) of the at least one switch (S1) according to the amplitude of the input voltage (V_{IN}) of the actively clocked PFC circuit (104) and keeps the switch-on time (t_{ON}) constant for two consecutive switching cycles within a half-wave of the input voltage (V_{IN}) in order to adjust a maximum value of a current received by the PFC circuit (104) in each second switching cycle to a half-wave of a sinusoidal envelope, wherein the integrated circuit (103) sets the switch-on time (t_{ON}) of the at least one switch (S1) further according to the output voltage of the actively clocked PFC circuit (104), so that the actual value of the output voltage of the PFC circuit (104) corresponds to a setpoint value,
- wherein the integrated circuit (103) is further adjusted to control the actively clocked PFC circuit (104) on the basis of at least one feedback variable (113) from the load circuit, wherein the at least one feedback variable (113) from the load circuit comprises at least one of the following variables:
an LED current, an LED voltage, a temperature of the LED track (106), a light power emitted by the LED track (106), or an electrical power received by the LED track (106).

## Revendications

1. Système (101) présentant,
- un module PFC (102)
- un circuit de charge comportant une section de DEL (106) ayant une ou plusieurs DEL, le module PFC (102) présentant un circuit PFC (104) activement synchronisé présentant au moins un commutateur commandé (S1),
- le circuit PFC activement synchronisé étant directement ou indirectement raccordé au circuit de charge, et présentant en outre
- un circuit intégré (103), de préférence un micro-contrôleur, comme unité de commande, qui commande l'au moins un commutateur (S1) du circuit PFC (104) activement synchronisé avec une fréquence de fonctionnement fixe, en mode discontinu, le circuit de commande intégré (103) étant adapté pour régler la durée d'activation (t_{ON}) de l'au moins un commutateur (S1) en fonction de l'amplitude de la tension d'entrée (V_{IN}) du circuit PFC (104) activement synchronisé et pour maintenir constante la durée d'activation (t_{ON}) pour deux cycles de commutation consécutifs pendant une demi-onde de la tension d'entrée (V_{IN}), pour adapter une valeur maximale d'un courant absorbé par le circuit PFC (104) dans chaque second cycle de commutation à une demi-onde d'une courbe enveloppe de forme sinusoïdale, le circuit intégré (103) étant adapté pour régler la durée d'activation (t_{ON}) de l'au moins un commutateur (S1) également en fonction de la tension de sortie du circuit PFC (104) activement synchronisé, de telle sorte que la valeur réelle de la tension de sortie du circuit PFC (104) corresponde à une valeur de consigne,
- le circuit intégré (103) étant en outre adapté pour commander le circuit PFC (104) activement synchronisé sur la base d'au moins une grandeur de rétroaction (113) provenant du circuit de charge, l'au moins une grandeur de rétroaction (113) du circuit de charge comprenant au moins l'une des grandeurs suivantes :
un courant de DEL, une tension de DEL, une température de la section de DEL (106), une puissance lumineuse émise par la section de DEL (106) ou une puissance électrique absorbée par la section de DEL (106).

2. Système (101) selon l'une des revendications précédentes,
- dans lequel le circuit de commande intégré présente au moins deux broches d'entrée, et
- dans lequel le circuit de commande intégré est adapté pour détecter la tension d'entrée du circuit PFC par l'intermédiaire de la première des au moins deux broches d'entrée et pour détecter la tension de sortie du circuit PFC par l'intermédiaire de la seconde des au moins deux broches d'entrée.

3. Système (101) selon l'une des revendications précédentes,
- dans lequel le circuit intégré est adapté pour modifier la fréquence de fonctionnement du circuit PFC avec une fréquence inférieure à la fréquence d'une demi-onde de la tension d'entrée du circuit PFC comme adaptation à des rapports de tension d'entrée et/ou de charge qui changent.

4. Système (101) selon l'une des revendications précédentes, présentant en outre
- au moins un étage convertisseur (105) comportant au moins un second commutateur (S2) pour actionner le circuit de charge,
- l'au moins un étage convertisseur (105) étant raccordé directement ou indirectement au circuit PFC (104),
- le circuit intégré étant en outre configuré pour commander l'au moins un étage convertisseur (105) en fonction des rapports de tension d'entrée et/ou de charge, et
- le circuit intégré (103) commandant l'au moins un second commutateur (S2) de l'au moins un étage convertisseur (105) pour régler la puissance lumineuse émise par la section de DEL (106).

5. Système selon la revendication 4, dans lequel le circuit de commande intégré détecte au moins une première grandeur de rétroaction de l'au moins un étage convertisseur et/ou détecte au moins une seconde grandeur de rétroaction de la section de DEL actionnable par l'au moins un étage convertisseur.

6. Système selon la revendication 5,
- dans lequel le circuit de commande intégré commande le circuit PFC activement synchronisé, de préférence la fréquence de fonctionnement du circuit PFC activement synchronisé, et l'au moins étage convertisseur en fonction de la tension d'entrée du circuit PFC activement synchronisé, de l'au moins une première grandeur de rétroaction et/ou de l'au moins une seconde grandeur de rétroaction.

7. Système selon la revendication 5 ou 6,
- dans lequel la tension de sortie du circuit PFC activement synchronisé correspond à la tension d'entrée de l'au moins un étage convertisseur, et
- dans lequel le circuit de commande intégré commande la tension de sortie du circuit PFC activement synchronisé en fonction de la tension d'entrée du circuit PFC activement synchronisé, de l'au moins une première grandeur de rétroaction et/ou de l'au moins une seconde grandeur de rétroaction.

8. Système selon l'une des revendications 5 à 7,
- dans lequel le circuit de commande intégré modifie la fréquence de fonctionnement du circuit PFC avec une fréquence inférieure à la fréquence d'une demi-onde de la tension d'entrée du circuit PFC activement synchronisé en fonction de la tension d'entrée du circuit PFC activement synchronisé, de l'au moins une première grandeur de rétroaction et/ou de l'au moins une seconde grandeur de rétroaction.

9. Dispositif d'éclairage, comportant
- un système (101) selon l'une des revendications 1 à 3,
- dans lequel le module PFC (102) est configuré pour faire fonctionner la section de DEL (106).

10. Dispositif d'éclairage, comportant
- un système (101) selon l'une des revendications 4 à 8,
- dans lequel le système (101) est configuré pour faire fonctionner la section de DEL (106).

11. Procédé pour faire fonctionner un module PFC (102) comportant un circuit PFC (104) activement synchronisé présentant au moins un commutateur (S1) commandé, et comportant un circuit intégré (103), de préférence un micro-contrôleur, comme unité de commande,
- dans lequel le circuit PFC activement synchronisé est directement ou indirectement raccordé à un circuit de charge présentant une section de DEL comportant une ou plusieurs DEL, et
- dans lequel le circuit intégré (103) commande l'au moins un commutateur (S1) du circuit PFC (104) activement synchronisé avec une fréquence de fonctionnement fixe, en mode discontinu,
- dans lequel le circuit de commande intégré (103) règle la durée d'activation (t_{ON}) de l'au moins un commutateur (S1) en fonction de l'amplitude de la tension d'entrée (V_{IN}) du circuit PFC (104) activement synchronisé et maintient constante la durée d'activation (t_{ON}) pour deux cycles de commutation consécutifs pendant une demi-onde de la tension d'entrée (V_{IN}), pour adapter une valeur maximale d'un courant absorbé par le circuit PFC (104) dans chaque second cycle de commutation à une demi-onde d'une courbe enveloppe de forme sinusoïdale, le circuit intégré (103) réglant la durée d'activation (t_{ON}) de l'au moins un commutateur (S1) également en fonction de la tension de sortie du circuit PFC (104) activement synchronisé, de telle sorte que la valeur réelle de la tension de sortie du circuit PFC (104) corresponde à une valeur de consigne,
- le circuit intégré (103) étant en outre adapté pour commander le circuit PFC (104) activement synchronisé sur la base d'au moins une grandeur de rétroaction (113) provenant du circuit de charge, l'au moins une grandeur de rétroaction (113) du circuit de charge comprenant au moins l'une des grandeurs suivantes :
un courant de DEL, une tension de DEL, une température de la section de DEL (106), une puissance lumineuse émise par la section de DEL (106) ou une puissance électrique absorbée par la section de DEL (106).
